# EUROPEAN PATENT APPLICATION

(11) **EP 4 552 771 A1**
(43) Date of publication of application: **14.05.2025**
(21) Application number: 24208415.0
(22) Date of filing: 23.10.2024
(51) Int. Cl.: B23B 29/04

(54) **TOOL HOLDER POSITIONING DEVICE AND MACHINE TOOL HAVING THE SAME**

(30) Priority: 13.11.2023 TW 112143721
(71) Applicant: Mountain Gracious Tech Ltd., Taichung City 407 (TW)
(72) Inventor: CHEN, Kun-Tung, 407 Taichung City (TW)
(74) Representative: Meissner Bolte Partnerschaft mbB

(57) **Abstract**

A tool holder positioning device (4, 4') configured to be disposed on a machine head device (3) of a machine tool and for installation of a tool holder device (5) includes a first adapting member (41, 41') to be disposed on one of the machine tool and the tool holder device (5), and a second adapting member (42, 42') to be disposed on the other one of the machine tool and the tool holder device (5). The first adapting member (41, 41') includes a protruding positioning portion (412') having a plurality of angularly spaced-apart first abutment areas (413) each of which has a first arcuate abutment surface (416). The second adapting member (42, 42') includes a recessed positioning portion (422') having a plurality of angularly spaced-apart second abutment areas (423) corresponding in number to the first abutment areas (413) and each of which has a second arcuate abutment surface (426) abutting against the first arcuate abutment surface (416) when the tool holder positioning device (4, 4') is in an engaged state.

## Description

The disclosure relates to a positioning device, and more particularly to a tool holder positioning device and a machine tool having the same.

A machine tool performs cutting by rotating a tool holder or a workpiece and bringing a cutting tool on the tool holder and the workpiece into contact with each other. A milling machine, for example, mills the non-rotating workpiece by rotating the tool holder.

Referring to FIGS. 1 and 2, an existing machine tool, as disclosed in Taiwanese Patent No. M545655, includes a spindle 11, a fixed seat 13 disposed on an end of the spindle 11, and a tool holder 10 removably connected to the spindle 11. The fixed seat 13 includes two spaced-apart bosses 131 each having an outer peripheral surface 132. The tool holder 10 has a body 11. One end of the body 11 has a tool handle 12, and the other end thereof is provided with a turning tool 15. A positioning plate 14 radially extends from the body 11 and abuts against the fixed seat 13. The positioning plate 14 has two grooves 141 respectively engaging the bosses 131. Each groove 141 has a groove inner surface 142. When the tool holder 10 is installed on the spindle 11, the bosses 131 are respectively fitted in the grooves 141. By virtue of the groove inner surfaces 142 of the grooves 141 respectively abutting against the outer peripheral surfaces 132 of the bosses 131, the tool holder 10 can be prevented from rotating.

However, during installation of the tool holder 10 onto the spindle 11 from bottom to top, the outer peripheral surfaces 132 of the bosses 131 and the groove inner surfaces 142 of the grooves 141 are continuously in frictional contact with each other. Since the contact area between the outer peripheral surface 132 of each boss 131 and the groove inner surface 142 of a respective groove 141 is large, the frictional force between the same is also large, so that the wear and tear of the outer peripheral surface 132 of each boss 131 and the groove inner surface 142 of the respective groove 141 are increased, thereby reducing the service life thereof. If in order to reduce friction between the outer peripheral surface 132 of each boss 131 and the groove inner surface 142 of the respective groove 141, each boss 131 and each groove 141 may be processed to increase a clearance between the outer peripheral surface 132 of each boss 131 and the groove inner surface 142 of the respective groove 141, however, a positioning accuracy of the tool holder 10 may be affected and reduced. Furthermore, a large clearance may also cause loosening and impact of the components. Thus, there is still room for improvement of the existing machine tool in terms of increasing the positioning accuracy and prolonging the service life thereof.

Therefore, an object of the present disclosure is to provide a tool holder positioning device that can alleviate at least one of the drawbacks of the prior art.

According to this disclosure, the tool holder positioning device is configured to be disposed on a machine head device of a machine tool, is configured for installation of a tool holder device, and includes a first adapting member and a second adapting member. The first adapting member is configured to be disposed on one of the machine tool and the tool holder device, and includes a first base surface, and a protruding positioning portion extending outwardly from the first base surface along a first axis. The protruding positioning portion has a plurality of angularly spaced-apart first abutment areas surrounding the first axis. Each first abutment area has a first large arcuate edge, a first small arcuate edge opposite to the first large arcuate edge along the first axis and a first arcuate abutment surface between the first large arcuate edge and the first small arcuate edge. A distance between the first arcuate abutment surface and the first axis gradually decreases from the first large arcuate edge to the first small arcuate edge. The first large arcuate edge is located between the first arcuate abutment surface and the first base surface.

The second adapting member is configured to be disposed on the other one of the machine tool and the tool holder device, is removably disposed on the first adapting member, and includes a second base surface, and a recessed positioning portion extending inwardly from the second base surface along a second axis aligned with the first axis. The recessed positioning portion has a plurality of angularly spaced-apart second abutment areas surrounding the second axis and corresponding in number to the first abutment areas. Each second abutment area has a second large arcuate edge, a second small arcuate edge opposite to the second large arcuate edge along the second axis, and a second arcuate abutment surface between the second large arcuate edge and the second small arcuate edge. A distance between the second arcuate abutment surface and the second axis gradually decreases from the second large arcuate edge to the second small arcuate edge. The second large arcuate edge is located between the second arcuate abutment surface and the second base surface.

The tool holder positioning device is transitionable between an engaged state and a disengaged state. In the engaged state, the first adapting member is engaged to the second adapting member, and the first arcuate abutment surfaces of the first abutment areas respectively abut against the second arcuate abutment surfaces of the second abutment areas. In the disengaged state, the first adapting member is separated from the second adapting member.

Another object of the present disclosure is to provide a machine tool that can alleviate at least one of the drawbacks of the prior art.

According to this disclosure, the machine tool includes a base device, a machine head device movably disposed on the base device, the above-mentioned tool holder positioning device removably disposed on the machine head device, and a tool holder device removably disposed on the tool holder positioning device.

Other features and advantages of the disclosure will become apparent in the following detailed description of the embodiment with reference to the accompanying drawings. It is noted that various features may not be drawn to scale.

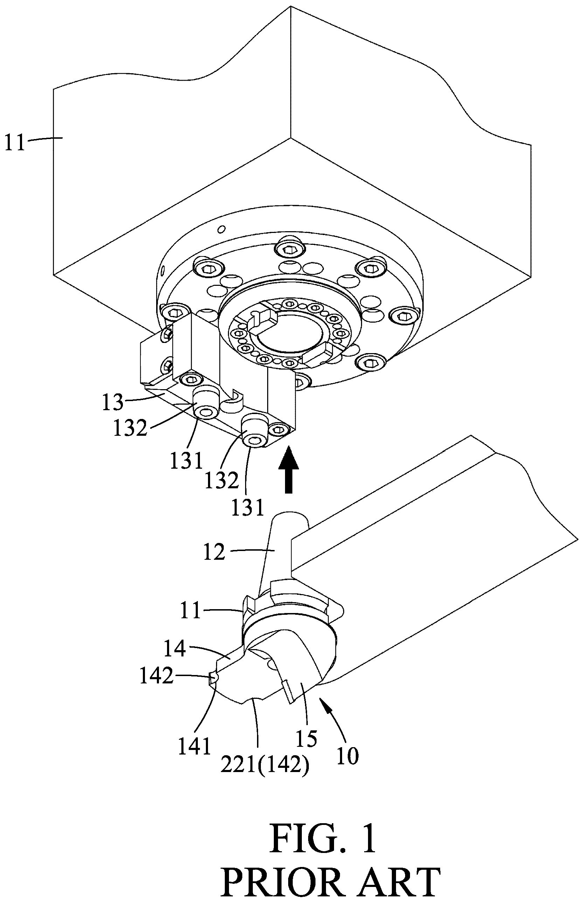

FIG. 1 is a fragmentary exploded perspective view of an existing machine tool disclosed in Taiwanese Patent No. M545655.

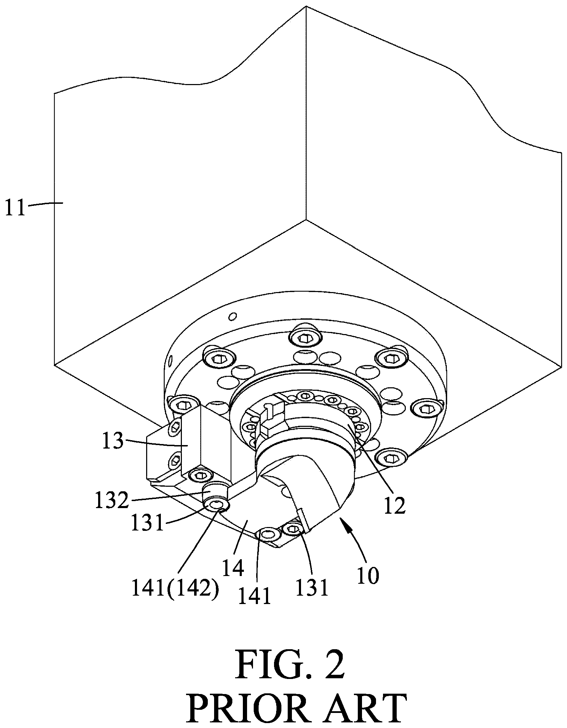

FIG. 2 is a fragmentary assembled perspective view of the existing machine tool of FIG. 1.
FIG. 3 is a front view of a machine tool according to an embodiment of the present disclosure.
FIG. 4 is a front view of a tool holder positioning device of the embodiment.
FIG. 5 is an exploded perspective view of the tool holder positioning device of the embodiment.
FIG. 6 is a sectional view taken along line VI-VI of FIG. 4.
FIG. 7 is an exploded schematic view of an alternative form of the tool holder positioning device of the embodiment.

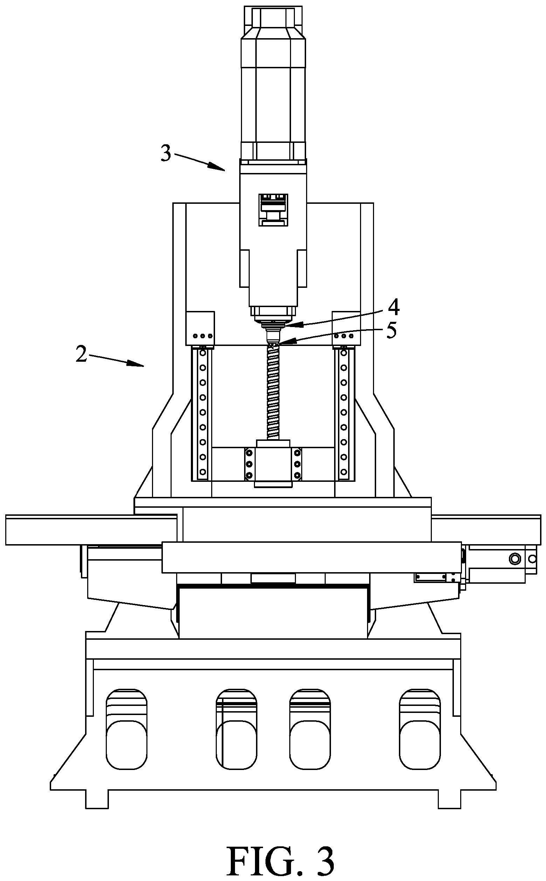

Referring to FIGS. 3 to 5, a machine tool according to an embodiment of the present disclosure includes a base device 2, a machine head device 3, a tool holder positioning device 4, and a tool holder device 5.

The machine head device 3 is movably disposed on the base device 2.

The tool holder positioning device 4 includes a first adapting member 41 removably disposed on the machine head device 3, and a second adapting member 42 removably disposed on the first adapting member 41.

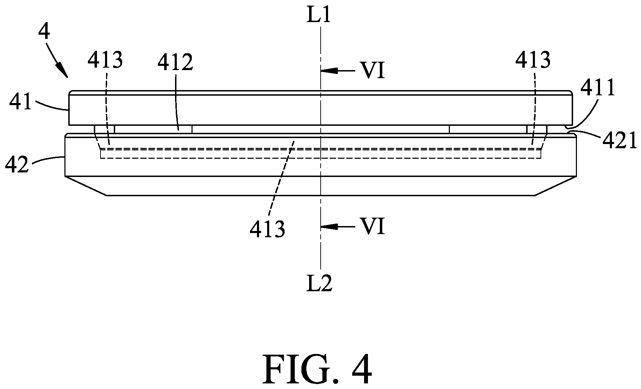

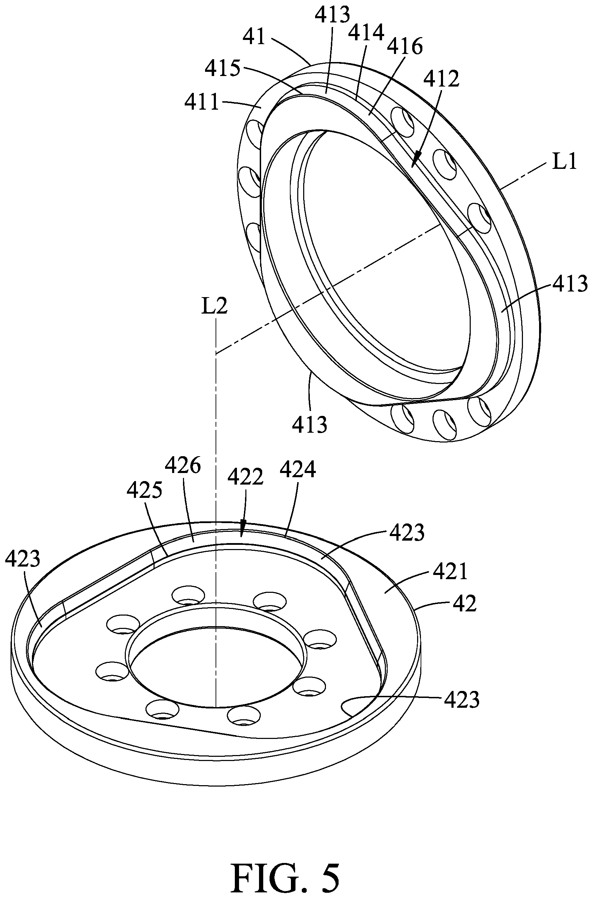

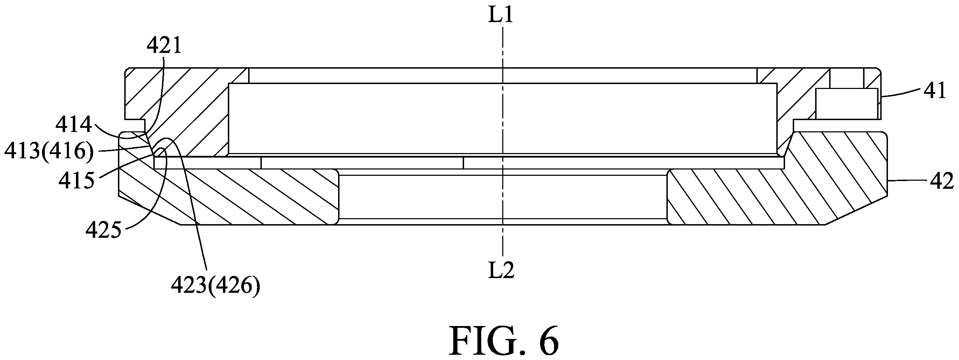

Referring to FIG. 6, in combination with FIGS. 4 and 5, the first adapting member 41 includes a first base surface 411, and a protruding positioning portion 412 extending outwardly from the first base surface 411 along a first axis (L1). The protruding positioning portion 412 is non-circular on a projection plane perpendicular to the first axis (L1), and has a rounded triangular shape in this embodiment. The protruding positioning portion 412 has three angularly spaced-apart first abutment areas 413 surrounding the first axis (L1). Each first abutment area 413 has a first large arcuate edge 414, a first small arcuate edge 415 opposite to the first large arcuate edge 414 along the first axis (L1), and a first arcuate abutment surface 416 between the first large arcuate edge 414 and the first small arcuate edge 415. A distance between the first arcuate abutment surface 416 and the first axis (L1) gradually decreases from the first large arcuate edge 414 to the first small arcuate edge 415. The first large arcuate edge 414 is located between the first arcuate abutment surface 416 and the first base surface 411.

The second adapting member 42 includes a second base surface 421, and a recessed positioning portion 422 extending inwardly from the second base surface 421 along a second axis (L2). The recessed positioning portion 422 is non-circular on a projection plane perpendicular to the second axis (L2), and has a rounded triangular shape in this embodiment. The recessed positioning portion 422 has a plurality of angularly spaced-apart second abutment areas 423 surrounding the second axis (L2) and corresponding in number to the first abutment areas 413. Each second abutment area 423 has a second large arcuate edge 424, a second small arcuate edge 425 opposite to the second large arcuate edge 424 along the second axis(L2) L2, and a second arcuate abutment surface 426 between the second large arcuate edge 424 and the second small arcuate edge 425. A distance between the second arcuate abutment surface 426 and the second axis (L2) gradually decreases from the second large arcuate edge 424 to the second small arcuate edge 425. The second large arcuate edge 424 is located between the second arcuate abutment surface 426 and the second base surface 421. In this embodiment, the first and second arcuate abutment surfaces 416 and 426 are tapered surfaces having shapes that match each other. The first axis (L1) and the second axis (L2) are substantially aligned with each other.

Specifically, in this embodiment, the protruding positioning portion 412 and the recessed positioning portion 422 have rounded triangular shapes, so that the first abutment areas 413 are equal in distance from the first axis (L1), the second abutment areas 423 are equal in distance from the second axis (L2), the first abutment areas 413 are equally angularly spaced apart from each other about the first axis (L1), and the second abutment areas 423 are equally angularly spaced apart from each other about the second axis (L2). In other embodiments, the first abutment areas 413 may be adjusted to have different distances from the first axis (L1), or may be adjusted not to be equally angularly spaced apart from each other about the first axis (L1), and the second abutment areas 423 may be adjusted accordingly, but not limited thereto.

Referring again to FIGS. 3 to 5, the tool holder device 5 is removably disposed on the second adapting member 42. In this embodiment, the first adapting member 41 is disposed on the machine head device 3, and the second adapting member 42 is provided for installation of the tool holder device 5. In other embodiments, the second adapting member 42 may be disposed on the machine head device 3, and the first adapting member 41 may be provided for installation of the tool holder device 5, but not limited thereto.

It is worth to mention herein that, in this embodiment, the machine tool is exemplified as a traditional milling machine. In other embodiments, the machine tool may be a horizontal boring machine or a turning and milling compound machine, but not limited thereto.

The tool holder positioning device 4 is transitionable between an engaged state (see FIG. 4) and a disengaged state (see FIG. 5). In the engaged state, the first base surface 411 faces the second base surface 421, the first adapting member 41 is engaged and secured to the second adapting member 42, and the first arcuate abutment surfaces 416 of the first abutment areas 413 respectively abut against the second arcuate abutment surfaces 426 of the second abutment areas 423. In the disengaged state, the first adapting member 41 is separated from the second adapting member 42.

In use, the first adapting member 41 is normally disposed on the machine head device 3, and the second adapting member 42 is disposed on the tool holder device 5 to be used. When a processing situation that requires limiting the rotation of the tool holder device 5 is encountered, the second adapting member 42 along with the tool holder device 5 is disposed on the first adapting member 41 by aligning the second abutment areas 423 with the respective first abutment areas 413. Furthermore, if the second arcuate abutment surfaces 426 do not abut against the respective first arcuate abutment surfaces 416, it is only necessary to slightly rotate the second adapting member 42 about the second axis (L2), so as to align the second abutment areas 423 with the respective first abutment areas 413, after which the first and second adapting members 41, 42 are fastened and secured to each other, thereby completing the positioning process of this embodiment. With the distance between the first arcuate abutment surface 416 and the first axis (L1) gradually decreasing from the first large arcuate edge 414 to the first small arcuate edge 415, and with the distance between the second arcuate abutment surface 426 and the second axis (L2) gradually decreasing from the second large arcuate edge 424 to the second small arcuate edge 425 (i.e., the first and second arcuate abutment surfaces 416, 426 of this embodiment are tapered surfaces), only two situations may occur during the initial positioning process: misalignment and jamming or aligned but not in contact between the first and second arcuate abutment surfaces 416, 426. There will be no surface to surface contact between the first and second arcuate abutment surfaces 416, 426, so that friction between the two can be prevented.

Compared to the existing machine tool, by limiting the first and second arcuate abutment surfaces 416, 426 as tapered surfaces, and by reducing the contact area between the first and second arcuate abutment surfaces 416, 426 before the tool holder positioning device 4 is switched to the engaged state, there is no need to increase a clearance between each first abutment area 413 and the respective second abutment area 423, so that the effect of enhancing the positioning accuracy and the service life of the machine tool of this disclosure can be enhanced. Furthermore, because there is no need to increase the clearance between each first abutment area 413 and the respective second abutment area 423, the first and second arcuate abutment surfaces 416, 426 can proceed with high precision processing, thereby further enhancing the positioning accuracy of this disclosure. In addition, when the tool holder positioning device 4 is in the engaged state, the first and second arcuate abutment surfaces 416, 426 abut against each other and are located inside the structure. Therefore, compared with the structure of the prior art, this disclosure can reduce impact of components, so as to enhance the service life thereof.

It is worth to mention herein that, in this embodiment, since the protruding positioning portion 412 and the recessed positioning portion 422 are non-circular, and since the first and second arcuate abutment surfaces 416, 426 are tapered surfaces, the first arcuate abutment surfaces 416 can easily abut against the respective second arcuate abutment surfaces 426, and are capable of resisting torque to prevent the tool holder device 5 from rotating. Furthermore, since the first abutment areas 413 are in equal distance from the first axis (L1), the second abutment areas 423 are in equal distance from the second axis (L2), the first abutment areas 413 are equally angularly spaced apart from each other about the first axis (L1), and the second abutment areas 423 are equally angularly spaced apart from each other about the second axis (L2), when the tool holder positioning device 4 is in the engaged state, the tool holder positioning device 4 is stable, thereby enhancing the accuracy during processing.

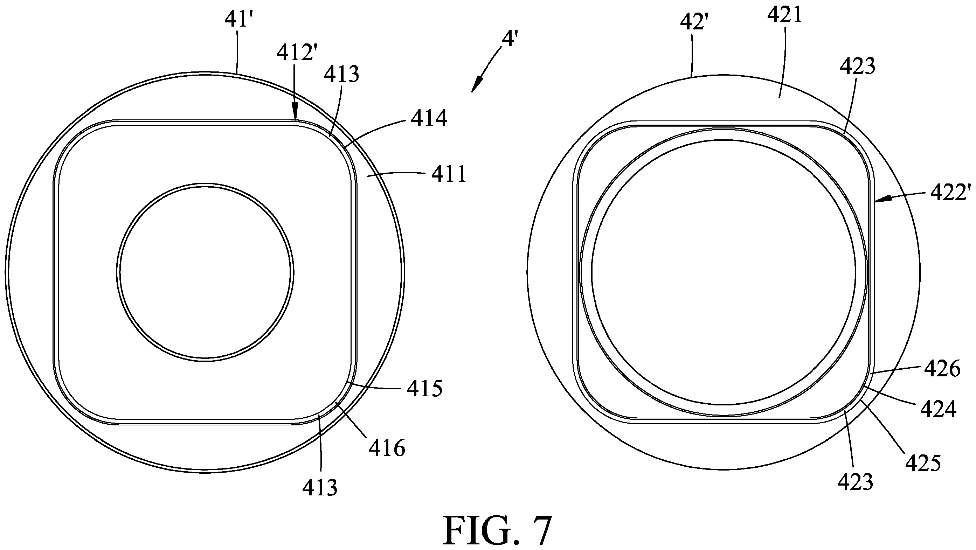

FIG. 7 illustrates an alternative form of the tool holder positioning device 4' of this disclosure. As shown in FIG. 7, the tool holder positioning device 4' differs from the tool holder positioning device 4 shown in FIG. 5 in that the protruding positioning portion 412' of the first adapting member 41' has a rounded rectangular shape on a projection plane perpendicular to the first axis (L1) (see FIG. 5), and has four angularly spaced-apart first abutment areas 413. Furthermore, the recessed positioning portion 422' of the second adapting member 42' has a rounded rectangular shape on a projection plane perpendicular to the second axis (L2) (see FIG. 5), and has four angularly spaced-apart second abutment areas 423. The tool holder positioning device 4' can similarly achieve the effects of the tool holder positioning device 4.

Therefore, the machine tool of this disclosure can indeed achieve the object thereof.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A tool holder positioning device (4, 4') configured to be disposed on a machine head device (3) of a machine tool and configured for installation of a tool holder device (5), said tool holder positioning device (4, 4') **characterized by**:
a first adapting member (41, 41') configured to be disposed on one of the machine tool and the tool holder device (5), and including a first base surface (411), and a protruding positioning portion (412, 412') extending outwardly from said first base surface (411) along a first axis (L1), said protruding positioning portion (412, 412') having a plurality of angularly spaced-apart first abutment areas (413) surrounding the first axis (L1), each of said first abutment areas (413) having a first large arcuate edge (414), a first small arcuate edge (415) opposite to said first large arcuate edge (414) along the first axis (L1), and a first arcuate abutment surface (416) between said first large arcuate edge (414) and said first small arcuate edge (415), a distance between said first arcuate abutment surface (416) and the first axis (L1) gradually decreasing from said first large arcuate edge (414) to said first small arcuate edge (415), said first large arcuate edge (414) being located between said first arcuate abutment surface (416) and said first base surface (411); and
a second adapting member (42, 42') configured to be disposed on the other one of the machine tool and the tool holder device (5), said second adapting member (42, 42') being removably disposed on said first adapting member (41, 41') and including a second base surface (421), and a recessed positioning portion (422, 422') extending inwardly from said second base surface (421) along a second axis (L2) aligned with the first axis (L1), said recessed positioning portion (422, 422') having a plurality of angularly spaced-apart second abutment areas (423) surrounding the second axis (L2) and corresponding in number to said first abutment areas (413), each of said second abutment areas (423) having a second large arcuate edge (424), a second small arcuate edge (425) opposite to said second large arcuate edge (424) along the second axis (L2), and a second arcuate abutment surface (426) between said second large arcuate edge (424) and said second small arcuate edge (425), a distance between said second arcuate abutment surface (426) and the second axis (L2) gradually decreasing from said second large arcuate edge (424) to said second small arcuate edge (425), said second large arcuate edge (424) being located between said second arcuate abutment surface (426) and said second base surface (421);
said tool holder positioning device (4, 4') being transitionable between an engaged state, in which said first adapting member (41, 41') is engaged to said second adapting member (42, 42'), and said first arcuate abutment surfaces (416) of said first abutment areas (413) respectively abut against said second arcuate abutment surfaces (426) of said second abutment areas (423); and a disengaged state, in which said first adapting member (41, 41') is separated from said second adapting member (42, 42').

2. The tool holder positioning device (4, 4') as claimed in claim 1, wherein said first adapting member (41, 41') is configured to be disposed on the machine tool, and said second adapting member (42, 42') is configured to be disposed on the tool holder device (5).

3. The tool holder positioning device (4) as claimed in claim 1, wherein said protruding positioning portion (412) has three said first abutment areas (413), and said recessed positioning portion (422) has three said second abutment areas (423).

4. The tool holder positioning device (4') as claimed in claim 1, wherein said protruding positioning portion (412') has four said first abutment areas (413), and said recessed positioning portion (422') has four said second abutment areas (423).

5. The tool holder positioning device (4, 4') as claimed in claim 1, wherein said first abutment areas (413) are equal in distance from the first axis (L1), and said second abutment areas (423) are equal in distance from the second axis (L2).

6. The tool holder positioning device (4, 4') as claimed in claim 1, wherein said first abutment areas (413) are equally angularly spaced apart from each other about the first axis (L1), and said second abutment areas (423) are equally angularly spaced apart from each other about the second axis (L2).

7. A machine tool comprising a base device (2), a machine head device (3) movably disposed on said base device (2), and a tool holder device (5), **characterized by**:
a tool holder positioning device (4, 4') as claimed in claim 1, said tool holder positioning device (4, 4') being removably disposed on said machine head device (3), said tool holder device (5) being removably disposed on said tool holder positioning device (4, 4').

8. The machine tool as claimed in claim 7, wherein said first adapting member (41, 41') is configured to be disposed on said machine tool, and said second adapting member (42, 42') is configured to be disposed on said tool holder device (5).

9. The machine tool as claimed in claim 7, wherein said protruding positioning portion (412) has three said first abutment areas (413), and said recessed positioning portion (422) has three said second abutment areas (423).

10. The machine tool as claimed in claim 7, wherein said protruding positioning portion (412') has four said first abutment areas (413), and said recessed positioning portion (422') has four said second abutment areas (423).

11. The machine tool as claimed in claim 7, wherein said first abutment areas (413) are equal in distance from the first axis (L1), and said second abutment areas (423) are equal in distance from the second axis (L2).

12. The machine tool as claimed in claim 7, wherein said first abutment areas (413) are equally angularly spaced apart from each other about the first axis (L1), and said second abutment areas (423) are equally angularly spaced apart from each other about the second axis (L2).
